# EUROPEAN PATENT APPLICATION

(11) **EP 4 375 102 A1**
(43) Date of publication of application: **29.05.2024**
(21) Application number: 22209877.4
(22) Date of filing: 28.11.2022
(51) Int. Cl.: B60K 1/00, B60K 11/08

(54) **AIR CONDUIT TUBE**

(71) Applicant: MAHLE International GmbH, 70376 Stuttgart (DE)
(72) Inventor: Dete, Vikas, 411015 Pune (IN); Heine, Reinhard, 71397 Leutenbach (DE); Sambhaji, Palve, 70374 Stuttgart (DE)
(74) Representative: BRP Renaud & Partner mbB Rechtsanwälte Patentanwälte Steuerberater

(57) **Abstract**

The invention relates to an air conduit tube (1) with an air inlet (2a) and an air outlet (2b). The air conduit tube (1) is outwardly delimited by a wall (3). At least one weak spot (10) is formed in the air conduit tube (1) and the air conduit tube (1) primarily deforms at the weak spot (10) when a collision force (F) acts.

The invention also relates to an arrangement (13) comprising the air conduit tube (1) and a heat exchanger (6).

## Description

The invention relates to an air conduit tube for a battery electric vehicle according to the generic term of claim 1. The invention also relates to an arrangement comprising the air conduit tube and a heat exchanger.

In a battery electric vehicle, components can be cooled by means of a coolant and the coolant itself can be cooled by means of ambient air in a heat exchanger. The ambient air can be guided from a radiator grille of the vehicle to the heat exchanger by means of an air conduit tube. For this purpose, the air conduit tube can be attached to the radiator grille with its air inlet and to the inlet of the heat exchanger with its air outlet. Disadvantageously, the heat exchanger and the air conduit tube can lose their function after a front collision, even at low speeds. In particular, the leakage of the coolant as well as the leakage of the ambient air can occur after a front collision, thereby disturbing the function of the vehicle as a whole. To avoid this, the air conduit tube is currently designed to be as stable as possible, thereby disadvantageously increasing its weight.

It is therefore the object of the invention to provide an improved or at least alternative embodiment for an air conduit tube of the generic type, in which the described disadvantages are overcome. In addition, a corresponding arrangement with the air conduit tube and a heat exchanger is to be provided.

This task is solved according to the invention by the object of the independent claims. Advantageous embodiments are the subject of the dependent claims.

The present invention is based on the general idea of providing weak spots in the air conduit tube that deform by a front collision, thereby keeping the air conduit tube and in particular the heat exchanger connected to the air conduit tube functional.

The air conduit tube according to the invention is provided i.e. designed for a battery electric vehicle. The air conduit tube contains an air inlet for introducing air and an air outlet for fixing to an inlet of a heat exchanger. The air conduit tube is outwardly delimited by a wall, wherein the wall fluidically interconnects the air inlet and the air outlet. According to the invention, the air conduit tube contains at least one weak spot. The respective weak spot is designed in such a way that, when a collision force directed in an air inflow direction acts on the air inlet, the air conduit tube primarily deforms at the weak spot.

The weak spot can absorb a collision force acting during a front collision. There, the weak spot deforms at first and as a result the air conduit tube deforms at predefined points. Accordingly, undefined deformation of the air conduit tube and crack formation at undesirable points of the air conduit tube can be prevented. As a result, any leakage that occurs in the air conduit tube is within the permitted i.e. predefined range. Due to absorbing the collision force acting on the air conduit tube during the front collision, the heat exchanger connected to the air conduit tube also remains functional. In other words, the collision force acting on the air conduit tube can be absorbed by the weak spots, thereby protecting the air conduit tube and also the heat exchanger connected to the air conduit tube. The front collision is in particular a front collision at low speeds. The collision force acts from the outside in the air inflow direction which corresponds to the direction of air flowing in or through the air inlet. Another advantage is that the air intake can be removed from below in the vehicle. Following no additional space is required at the front when dismantling the air intake.

In general, such a weak spot respectively weak point, mentioned above and below, can also be designed as a predetermined breaking point or a predetermined buckling point.

As described above, the air inlet of the air conduit tube is provided i.e. designed for introducing air into the air conduit tube. For this purpose, the air inlet can be arranged on and fluidically connected to a radiator grille of the vehicle. The air inlet is thereby formed by an inlet opening in the wall of the air conduit tube. The air inflow direction is thus aligned perpendicular to the inlet opening. A circumferential seal i.e. a ring seal can be attached to the air inlet. The circumferential seal i.e. the ring seal is suitably designed to seal the air inlet of the air conduit tube. The circumferential seal i.e. the ring seal thereby surrounds the inlet opening i.e. the air inlet in a sealing manner. The air outlet is provided i.e. designed to be fixed to the inlet of the heat exchanger. It goes without saying that the inlet of the heat exchanger is provided i.e. designed for introducing air into the heat exchanger. The air outlet is thereby formed by an outlet opening in the wall of the air conduit tube. The heat exchanger can be attached to the air outlet of the air conduit tube in a fluid-tight manner.

The wall of the air conduit tube fluidically interconnects the air inlet and the air outlet. The air conduit tube i.e. the wall of the air conduit tube can be formed of plastic. The air conduit tube can contain a single weak spot or multiple weak spots. The multiple weak spots can be formed identically to each other or differently from each other. Some of the multiple weak spots can be formed at the air inlet i.e. adjacent to the air inlet, and some of the multiple weak spots can be formed at the air outlet i.e. adjacent to the air outlet.

In one possible embodiment of the weak spot, the at least one weak spot can be formed in the wall of the air conduit tube. In particular, the weak spot can be formed by a reduced thickness of the wall. Preferably, the thickness of the wall can be reduced by 30% to 50%.

The at least one weak spot can be elongated and arranged adjacent to and spaced from the air inlet. The at least one weak spot can thereby align parallel to an edge of the wall enclosing the air inlet. It goes without saying that several weak spots can be formed around the air inlet. The air conduit tube can contain at least two reinforcing ribs which are spaced apart from one another on the wall and are each aligned parallel to an edge of the wall enclosing the air inlet. The weak spot can then be arranged between the two adjacent reinforcing ribs.

The wall of the air conduit tube can be formed, at least at the air inlet, by four wall sections which face each other in pairs. By that, the air inlet can have a rounded rectangular cross-section transversely to the air inflow direction. The weak spot can then extend over at least one wall section and at most over three mutually adjacent wall sections. In other words, the respective weak spot can surround i.e. enclose the air inlet on up to three sides.

The at least one weak spot can surround i.e. enclose the air inlet around its circumference by more than 25%. The air conduit tube can also contain more than one weak spot, wherein the respective weak spots can surround i.e. enclose the air inlet at its circumference by more than 75%.

The air conduit tube can contain a fastening unit for fixing the heat exchanger. The fastening unit can be formed on the wall adjacent to the air outlet and can contain at least one fastening element projecting from the wall to the outside. The fastening element can be formed integrally i.e. from the same piece of material with the wall of the air conduit tube. The respective fastening element can be connectable to a complementary fastening of the heat exchanger in a force-fitting and/or form-fitting manner, and thereby the heat exchanger can be fixedly connectable to the air conduit tube in a force-fitting and/or form-fitting manner. The fastening unit can contain several - for example two or three or four or more - fastening elements which can be distributed around the air outlet.

The at least one weak spot can - as described above - be formed in the wall of the air conduit tube. The at least one weak spot can be formed adjacent to the respective fastening element and surround i.e. enclose the respective fastening element in areas facing away from the air outlet. The weak spot can thus be arranged in front i.e. upstream of the respective fastening element with respect to the collision force acting during a front collision. The weak spot can be formed - as described above - by a reduced thickness of the wall. In this case, the thickness of the wall can be reduced by 30% to 50%, for example. The weak spot can be elongated and also have a rounded shape. By a front collision, the air conduit tube can then deform at the weak spot, thereby preventing force transmission to the fastening element and further to the heat exchanger. It goes without saying that multiple weak spots can be formed adjacent i.e. be assigned to the respective fastening element. If the fastening unit contains multiple fastening elements, one or more weak spots can be formed adjacent i.e. assigned to each of the fastening elements.

Alternatively, the at least one weak spot can be formed as a notch in the at least one fastening element facing away from the air outlet. In this case, the notch can be elongated and penetrate the fastening element parallel to the collision force acting during a front collision. In particular, the notch can have a triangular cross-section. By a front collision, the fastening element can then buckle i.e. kink in a predefined manner at the weak spot, thereby preventing force transmission to the heat exchanger. As already explained above, a single weak spot and multiple weak spots can be formed on the respective fastening element.

In the following, three possible embodiments of the at least one weak spot are mentioned by way of example. It goes without saying that these embodiments are not final. It goes without further saying that the air conduit tube can contain multiple weak spots in only one embodiment or in different embodiments.

In a first embodiment, the weak spot can be elongated and formed in the wall of the air conduit tube adjacent to the air inlet. The weak spot can be aligned parallel to an edge of the wall enclosing the air inlet. In a second embodiment, the air conduit tube can contain a fastening unit with at least one fastening element formed at the air outlet. The weak spot can then be formed in the wall of the air conduit tube adjacent to the fastening element. In a third embodiment, the air conduit tube can contain a fastening unit with at least one fastening element formed at the air outlet. Here, the weak spot can be formed as a notch in the fastening element.

The invention also relates to an arrangement for a battery electric vehicle. The arrangement contains an air conduit tube with an air inlet and an air outlet, and a heat exchanger. The heat exchanger is attached with its inlet to the air outlet of the air conduit tube in a fluid-tight manner to the outside. According to the invention, the air conduit tube is formed i.e. designed as described above. To avoid repetition, reference is made at this point to the above explanations.

Further important features and advantages of the invention are apparent from the subclaims, from the drawings, and from the accompanying figure description based on the drawings.

It goes without saying that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: a partial view of an air conduit tube according to the invention at the air inlet;
- Figs. 2 and 3: further partial views of the air conduit tube at the air inlet;
- Figs. 4 and 5: enlarged views of the air conduit tube on a fastening unit;
- Figs. 6 and 7: partial views of an arrangement according to the invention with the air conduit tube and a heat exchanger;
- Figs. 8 and 9: cross-sectional views of the arrangement in the area of weak spots;
- Figs. 10 and 11: cross-sectional views of the arrangement at the air outlet of the air conduit tube in the area of weak spots;
- Fig. 12: a sectional view of the arrangement at the air outlet of the air conduit tube in the area of a further weak spot.

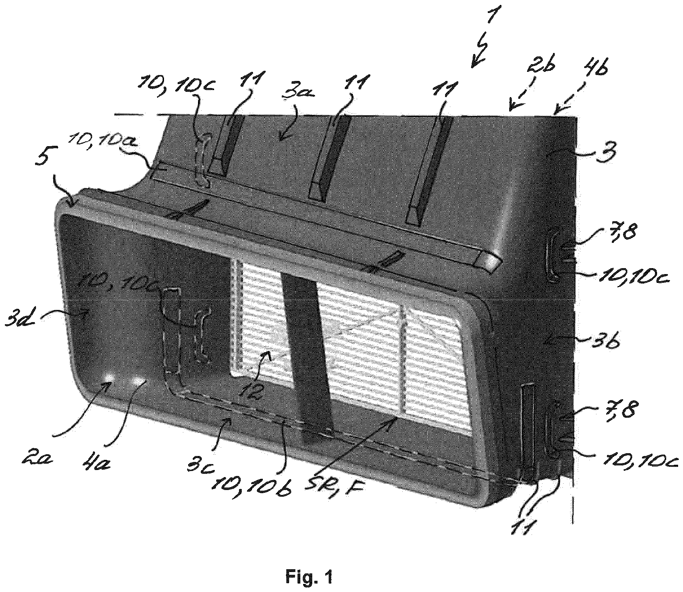

Fig. 1 shows a partial view of an air conduit tube 1 according to the invention. The air conduit tube 1 contains an air inlet 2a and an air outlet 2b. The air conduit tube 1 is outwardly delimited by a wall 3, which connects the air inlet 2a to the air outlet 2b in an air-conducting i.e. fluidic manner. The air conduit tube 1 i.e. the wall 3 of the air conduit tube 1 is made from plastic.

The air inlet 2a is thereby provided i.e. designed for introducing air into the air conduit tube 1 and can be fixed to a radiator grille of a vehicle. The air inlet 2a is formed by an inlet opening 4a in the wall 3. A circumferential seal i.e. ring seal 5 is arranged at the inlet opening 4a and seals the air inlet 2a. Air can flow into the air conduit tube 1 via the air inlet 2a i.e. the air inlet opening 4a in an air inflow direction SR.

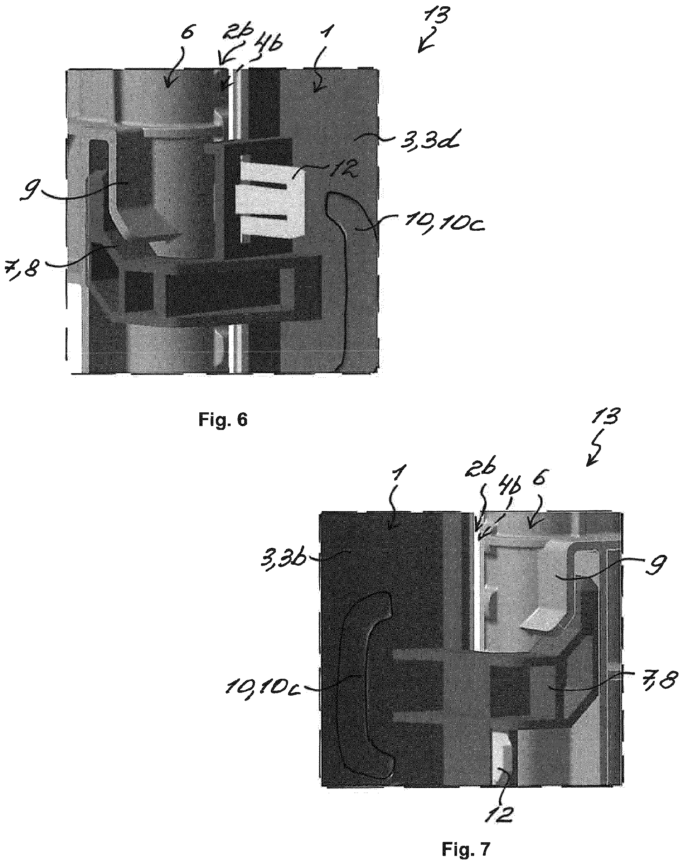

The air outlet 2b is provided i.e. designed to be fixed to an inlet of a heat exchanger 6 - see for example Fig. 6 and Fig. 7 - and is formed by an outlet opening 4b in the wall 3. The air conduit tube further 1 contains a fastening unit 7 with several - here four - fastening elements 8 formed integrally with the wall 3 of the air conduit tube 1. The fastening elements 8 are formed at and around the air outlet 2b i.e. the outlet opening 4b and projects from the wall 3 to the outside. The fastening elements 8 are connectable with complementary fastenings 9 of the heat exchanger 6 - see for example Fig. 6 and Fig. 7 - in a force-fitting and/or form-fitting manner.

The wall 3 contains four wall sections 3a, 3b, 3c, 3d, wherein the wall sections 3a and 3c and the wall sections 3b and 3d face each other. As a result, the air inlet 2a i.e. the inlet opening 4a has a rounded rectangular cross section. In Fig. 1, the wall section 3a is located at the top, the wall section 3b is located at the right, the wall section 3c is located at the bottom, and the wall section 3d is located at the left. In the following, reference is always made to this definition.

The air conduit tube 1 contains a plurality of i.e. multiple weak spots 10 which differ from each other. An elongated weak spot 10a is formed in the wall section 3a of the wall 3 and an overlapping weak spot 10b is formed in the wall sections 3b, 3c, 3d of the wall 3. The portions of the weak spot 10b that are not directly visible are indicated with broken lines here. The weak spots 10a and 10b are formed parallel to and spaced from an edge enclosing the air inlet 2a i.e. the inlet opening 4a. Transversely to the air inflow direction SR, the weak spots 10a and 10b enclose together the air inlet 2a i.e. the inlet opening 4a by more than 75%. The weak spots 10a and 10b are formed by a by 30% to 50% reduced thickness of the wall 3.

A plurality of reinforcing ribs 11 are also formed on the wall 3 in the wall section 3a and in the wall section 3c. In the wall section 3a, the reinforcing ribs 11 are aligned parallel to the air inflow direction SR and the weak spot 10a interrupts them. In the wall section 3c, the reinforcing ribs 11 are aligned transversely to the air inflow direction SR and the weak spot 10b is located in areas between two of the adjacent reinforcing ribs 11.

Furthermore, four weak spots 10c are formed in the wall 3, each of which is assigned to one of the fastening elements 8 of the fastening unit 7. The weak spots 10c which are not directly visible are indicated with broken lines here. The weak spots 10c are formed by a by 30% to 50% reduced thickness of the wall 3. The respective weak spot 10c is thereby arranged in front i.e. upstream of the respective fastening element 8 in the air inflow direction SR. The respective weak spot 10c is also elongated and has a rounded shape with end sections facing the respective fastening element 8.

By a front collision, a collision force F acts in the air inflow direction SR from the outside and the air conduit tube 1 primarily i.e. at first deforms at the weak spots 10a, 10b, 10c. This can prevent undefined deformation of the air conduit tube 1 and crack formation at undesirable points of the air conduit tube 1. A leakage which occurs in the air conduit tube 1 after the front collision remains within the permitted i.e. predefined range. Moreover, the collision force F is absorbed by the weak spots 10a, 10b, 10c, and the heat exchanger 6 connected to the air conduit tube 1 remains functional. Thus, after the front collision, only the air conduit tube 1 needs to be replaced. It goes without saying that said front collision is a front collision at a low speed.

Furthermore, the air conduit tube comprises a protective grid 12 arranged at the air outlet 2b i.e. at the outlet opening 4b. The protective grid 12 protects the heat exchanger 6, for example, from stones penetrating with air. The protective grid 12 is latched to the fastening elements 8 of the fastening unit 7 - see also Fig. 6 and Fig. 7 - and thereby fixed on the air conduit tube 1.

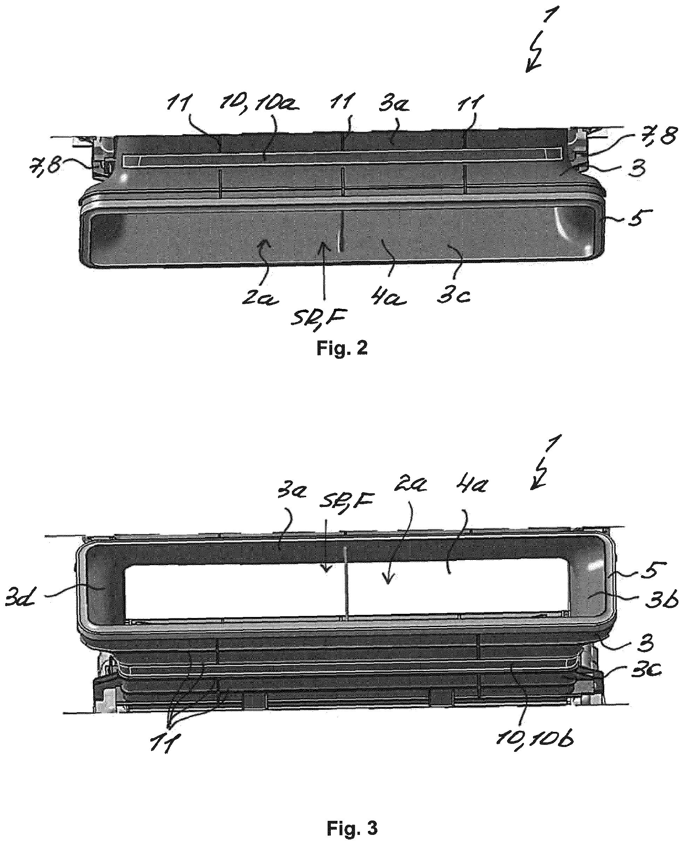

Fig. 2 shows a view of the air conduit tube 1 at the air inlet 2a from the top. In Fig. 2, the weak spot 10a in the wall section 3a can be seen particularly well.

Fig. 3 shows a view of the air conduit tube 1 at the air inlet 2a from the bottom. In Fig. 3, the weak spot 10b in the wall sections 3b, 3c, 3d can be seen particularly well.

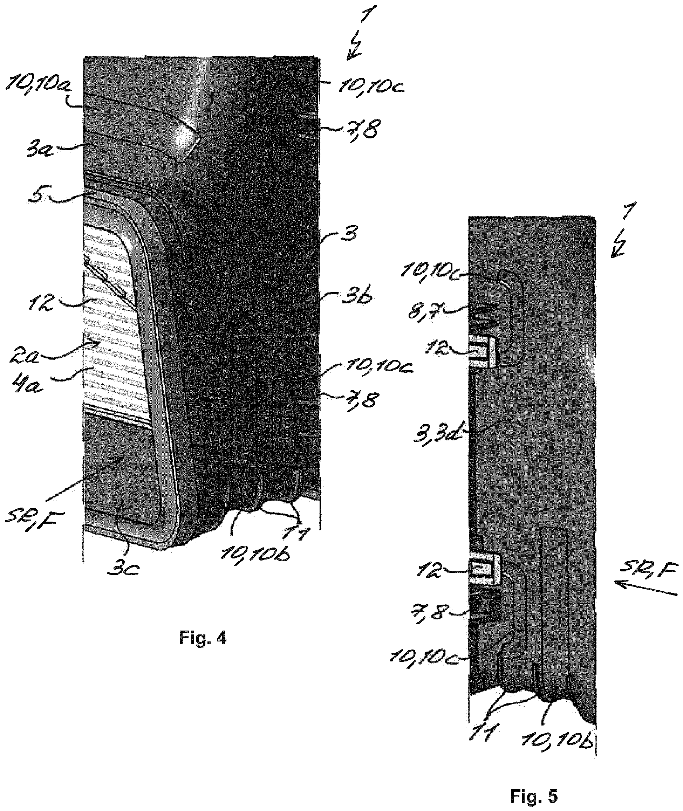

Fig. 4 shows an enlarged view of the air conduit tube 1 from the right. Here, the two weak spots 10c in the wall section 3b can be seen particularly well. The two weak spots 10c - as already explained above - are assigned to the two fastening elements 8 of the fastening unit 7. The respective weak spot 10c is formed in the air inflow direction SR in front i.e. upstream of the respective fastening element 8 i.e. between the respective fastening element 8 and the air inlet 2a.

Fig. 5 shows an enlarged view of the air conduit tube 1 from the left. In Fig. 5, the weak spots 10c in the wall section 3d can be seen particularly well. As explained above, the two weak spots 10c are assigned to the two fastening elements 8 of the fastening unit 7 and are formed each between the respective fastening element 8 and the air inlet 2a.

Fig. 6 shows a partial view of an arrangement 13 according to the invention with the air conduit tube 1 and the heat exchanger 6 from the left. Fig. 7 shows partial view of the arrangement 13 with the air conduit tube 1 and the heat exchanger 6 from the right. Here, the heat exchanger 6 is attached to the air outlet 2b of the air conduit tube 1. For this purpose, the heat exchanger 6 - as already explained above - contains fastenings 9 which are connected to the fastening elements 8 of the fastening unit 7. The fastenings 9 of the heat exchanger 6 can be made from plastic. In Fig. 6 and Fig. 7, the snap-in connection between the protective grid 12 and the fastening elements 8 of the fastening unit 7 can also be seen.

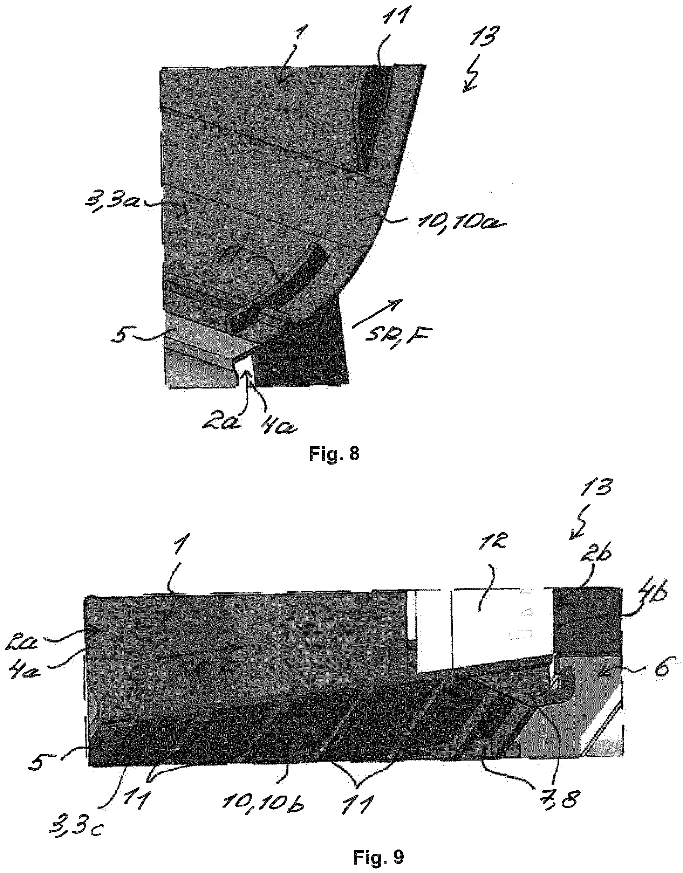

Fig. 8 shows a sectional view of the arrangement 13 at the air inlet 2a of the air conduit tube 1 from the top in the region of the weak spot 10a. As can be seen particularly well here, the weak spot 10a in the wall section 3a is formed by a by 30% to 50% reduced thickness of the wall 3. In addition, the reinforcing ribs 11 can be seen, which are aligned transversely to the weak spot 10a and are interrupted by the weak spot 10a.

Fig. 9 shows a sectional view of the arrangement 13 from the bottom in the region of the weak spot 10b. Here, too, it can be seen that the weak spot 10b in wall sections 3b, 3c, 3d is formed by a by 30% to 50% reduced thickness of the wall 3.

In addition, the reinforcing ribs 11 can be seen, which are aligned parallel to the weak spot 10b in wall section 3c. The weak spot 10b is thereby formed between two of the adjacent reinforcing ribs 11.

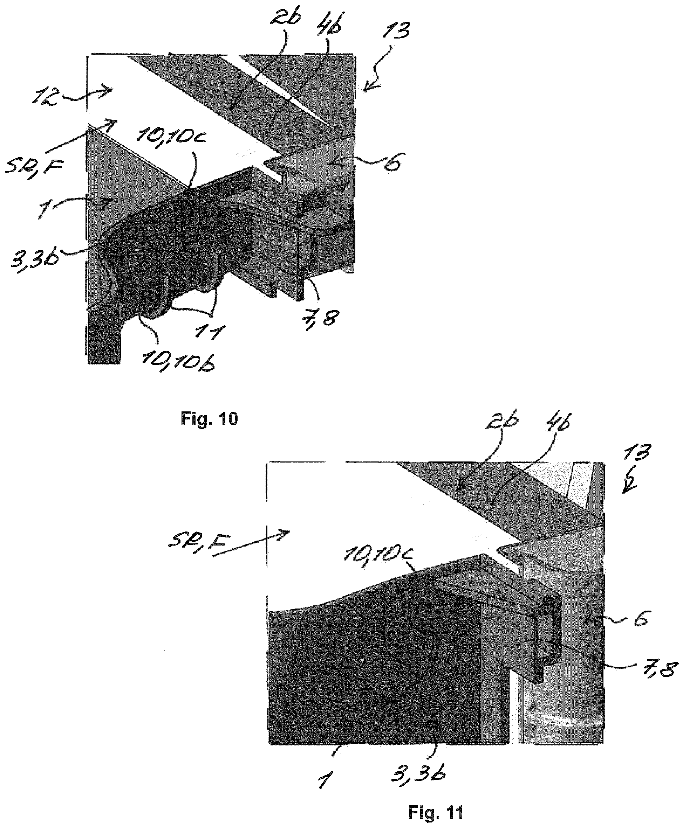

Fig. 10 and Fig. 11 show sectional views of the arrangement 13 at the air outlet 2b of the air conduit tube 1 from the right in the area of the weak spots 10c. In Fig. 10, the lower fastening element 8 of the fastening unit 7 i.e. the fastening element 8 adjacent to the wall section 3c is shown. In Fig. 11, the upper fastening element 8 of the fastening unit 7 i.e. the fastening element 8 adjacent to the wall section 3a is shown. As can be seen in Fig. 10 and Fig. 11, the weak spots 10c are formed in the same way by a by 30% to 50% reduced thickness of the wall 3.

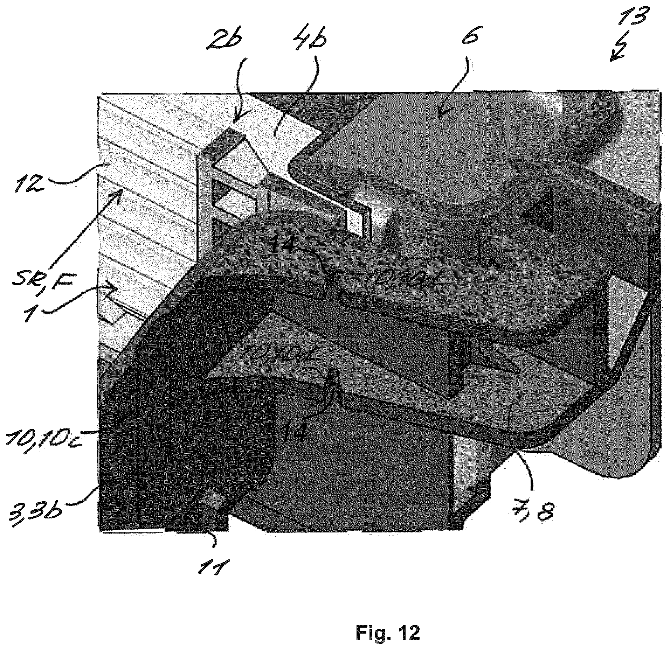

Fig. 12 shows a sectional view of the arrangement 13 at the air outlet 2b of the air conduit tube 1 from the right. Here, two further weak spots 10d are formed on the fastening element 8 of the fastening unit 7. In contrast to the weak spots 10a, 10b, 10c, the weak spots 10d are each formed by a notch 14 in the fastening element 8. The respective notch 14 engages in the respective fastening element 14 in the air inflow direction SR. By a front collision, the respective fastening element 8 can buckle i.e. kink at the weak spot 10d and thereby absorb the collision force F. This allows the heat exchanger 6 to remain functional and only the air conduit tube 1 has to be replaced after the front collision.

## Claims

1. Air conduit tube (1) for a battery electric vehicle,
- wherein the air conduit tube (1) contains an air inlet (2a) for introducing air and an air outlet (2b) for fixing to an inlet of a heat exchanger (6),
- wherein the air conduit tube (1) is outwardly delimited by a wall (3) fluidically interconnecting the air inlet (2a) and the air outlet (2b),
**characterized**
**in that** the air conduit tube (1) contains at least one weak spot (10), wherein the respective weak spot (10) is designed in such a way that, when a collision force (F) directed in an air inflow direction (SR) acts on the air inlet (2a), the air conduit tube (1) primarily deforms at the weak spot (10).

2. Air conduit tube according to claim 1,
**characterized**
**in that** the at least one weak spot (10) is formed in the wall (3) of the air conduit tube (1).

3. Air conduit tube according to claim 2,
**characterized**
**in that** the at least one weak spot (10) is formed by a reduced, preferably by 30% to 50%, thickness of the wall (3).

4. Air conduit tube according to claim 2 or 3,
**characterized**
- **in that** the at least one weak spot (10) is elongated and is arranged adjacent to and spaced from the air inlet (2a), and
- **in that** the at least one weak spot (10) aligns parallel to an edge of the wall (3) enclosing the air inlet (2a).

5. Air conduit tube according to claim 4,
**characterized**
- **in that** the air conduit tube (1) contains at least two reinforcing ribs (11) on the wall (3) which are spaced from one another and are aligned parallel to an edge of the wall (3) enclosing the air inlet (2a), and
- **in that** the weak spot (10) is arranged between the two adjacent reinforcing ribs (11).

6. Air conduit tube according to claim 4 or 5,
**characterized**
- **in that** the wall (3) of the air conduit tube (1) is formed, at least at the air inlet (2a), by four wall sections (3a, 3b, 3c, 3d) which face each other in pairs, so that the air inlet (2a) has a rounded rectangular cross section transversely to the air inflow direction (SR), and
- **in that** the weak spot (10) extends over at least one wall section (3a, 3b, 3c, 3d) and at most over three mutually adjacent wall sections (3a, 3b, 3c, 3d).

7. Air conduit tube according to any one of claims 4 to 6,
**characterized**
- **in that** the at least one weak spot (10) encloses the air inlet (2a) at its circumference by more than 25%, and/or
- **in that** the air conduit tube (1) contains more than one weak spot (10), wherein the respective weak spots (10) enclose the air inlet (2a) at its circumference by more than 75%.

8. Air conduit tube according to claim 2 or 3,
**characterized**
- **in that** the air conduit tube (1) contains a fastening unit (7) for fixing the heat exchanger (6),
- **in that** the fastening unit (7) is formed on the wall (3) adjacent to the air outlet (2b) and contains at least one fastening element (8) projecting from the wall (3), and
- **in that** the at least one weak spot (10) is formed adjacent to the respective fastening element (8) and surrounds the respective fastening element (8) in regions facing away from the air outlet (2b).

9. Air conduit tube according to claim 1,
**characterized**
- **in that** the air conduit tube (1) contains a fastening unit (7) for fixing the heat exchanger (6),
- **in that** the fastening unit (7) is formed on the wall (3) adjacent to the air outlet (2b) and contains at least one fastening element (8) projecting from the wall (3), and
- **in that** the at least one weak spot (10) is a notch (14) formed in the fastening element (8) facing away from the air outlet (2b).

10. Arrangement (13) for a battery electric vehicle,
- wherein the arrangement (13) contains an air conduit tube (1) with an air inlet (2a) and an air outlet (2b), and a heat exchanger (6),
- wherein the heat exchanger (6) is attached with its inlet to the air outlet (2b) of the air conduit tube (1) in a fluid-tight manner to the outside,
**characterized**
**in that** the air conduit tube (1) is formed according to any one of the preceding claims.
